# EUROPÄISCHE PATENTSCHRIFT

(11) **EP 4 058 199 B1**
(45) Veröffentlichungstag und Bekanntmachung des Hinweises auf die Patenterteilung: **23.08.2023**
(21) Anmeldenummer: 20803824.0
(22) Anmeldetag: 09.11.2020
(51) Int. Cl.: B04B 1/08, B04B 7/14, B21D 22/16, B33Y 80/00

(54) **TRENNTELLER, TRENNTELLERPAKET UND ZENTRIFUGE MIT DEM TRENNTELLERPAKET SOWIE VERFAHREN ZUR HERSTELLUNG DES TRENNTELLERS**
SEPARATOR DISC, SEPARATOR DISC PACKAGE, CENTRIFUGE COMPRISING THE SEPARATOR DISC PACKAGE, AND METHOD FOR PRODUCING THE SEPARATOR DISC
DISQUE SÉPARATEUR, ENSEMBLE DE DISQUES SÉPARATEURS, CENTRIFUGEUSE COMPRENANT L'ENSEMBLE DE DISQUES SÉPARATEURS ET PROCÉDÉ DE PRODUCTION DU DISQUE SÉPARATEUR

(30) Priorität: 14.11.2019 DE 102019130796
(43) Veröffentlichungstag der Anmeldung: 21.09.2022
(73) Patentinhaber: GEA Mechanical Equipment GmbH, 59302 Oelde (DE)
(72) Erfinder: HADAMIK, Adam-Michael, 44229 Dortmund (DE); QUITER, Kathrin, 48317 Drensteinfurt (DE); FRIEDS, Stephan, 21244 Buchholz (DE)
(74) Vertreter: Specht, Peter
(86) Internationale Anmeldenummer: PCT/EP2020/081493
(87) Internationale Veröffentlichungsnummer: WO 2021/094256

(56) Entgegenhaltungen:
- DE-A1-102015 117 375
- DE-B4-112006 002 309
- DE-C1- 4 036 071
- US-A1- 2018 008 990

## Beschreibung

Die vorliegende Erfindung betrifft einen Trennteller nach dem Oberbegriff des Anspruchs 1, ein Paket aus diesen Trenntellern nach Anspruch 20 und eine Zentrifuge mit einem solchen Trenntellerpaket nach Anspruch 21 sowie ein Verfahren zur Herstellung eines solchen Trenntellers nach Anspruch 22.

Trennteller für Zentrifugen, wie z.B. Separatoren weisen üblicherweise Abstandshalter auf, durch die der einzelne Trennteller in einem Trenntellerstapel beabstandet zu dem benachbarten Trennteller positioniert ist. Aus hygienischen Gründen wird gefordert, dass die Abstandshalter- z.B. in Form von Laschen - und der Trennteller möglichst spaltfrei miteinander verbunden sein sollen.

Dabei sollen die Geometrie der Abstandshalter sowie deren Positionierung auf dem Trennteller möglichst variabel ausgestaltbar sein. Übliche Geometrien der Abstandshalter sind z.B. linienförmig, gerade, gebogen, mäanderförmig oder auch punktförmig.

Üblicherweise wird die Grundgeometrie eines Trenntellers durch einen Umformprozess hergestellt. Bekannte Umformverfahren zur Herstellung eines Trenntellers sind z.B. das Drücken bzw. das Planieren, wie dies z.B. in der DE 11 2006 002 309 B4 oder in der EP 2 556 895 B1 beschrieben ist.

Als Fügeverfahren zur Befestigung der Abstandshalter auf dem Trennteller kommt üblicherweise das Punktschweißen zum Einsatz, wodurch jedoch zwischen dem Trennteller und dem jeweiligen Abstandshalter Spalte verbleiben können.

In Zentrifugen für Pharmaanwendungen werden deshalb auch Abstandshalter auf dem Trennteller mit einem Laser umlaufend verschweißt, um mögliche Spalte zwischen dem Trennteller und dem Abstandshalter zu vermeiden (siehe hierzu z.B. DE 40 360 71 C1).

Nachteilig hierbei ist der aufwändige Schweißprozess. Ferner kann der aus dem Schweißprozess resultierende Wärmeeintrag Umformspannungen im Trennteller freisetzen, die dazu führen können, dass sich der Trennteller durch den Schweißprozess verzieht.

Aus dem Stand der Technik sind ferner Trennteller bekannt, bei denen die Abstandshalter durch einen weiteren Umformprozess in den Trennteller eingebracht werden, so dass ein einstückiger Trennteller entsteht. Beispielhaft seien dazu die EP 3 315 203 B1, die EP 3 315 204 B1, die EP 3 315 205 A1 sowie die DE 197 05 704 C1 genannt.

Nachteilig hierbei ist, dass für jede Abstandhaltergeometrie je Trenntellerausführung und -größe ein individuelles Umformwerkzeug als Negativform für einen Umformprozess erforderlich ist. Dies ist erforderlich, da sowohl die Anzahl und Anordnung der Abstandshalter auf dem jeweiligen Trennteller als auch deren Geometrie und Höhe in einem einzigen Umformwerkzeug nicht oder nur mit erheblichem Aufwand variiert werden kann. Weiterhin können durch einen solchen Umformprozess auch nur Abstandshalter erzeugt werden, die sich nach außen verjüngen, da sie sonst nicht aus dem Umformwerkzeug zu lösen wären.

Ebenfalls nachteilig ist, dass der Trennteller und die Abstandhalter -durch den Herstellprozess bedingt- aus dem gleichen Werkstoff hergestellt sind.

Aus dem Stand der Technik ist weiterhin die US 2018 / 0008990 A1 bekannt, in der ein im 3D-Druckverfahren hergestellter Trennteller sowie ein vollständig im 3D-Druckverfahren einstückig hergestelltes Trenntellerpaket und weiterer Teile eines Separators, die im 3D-Druckverfahren hergestellt sind, offenbart sind.

Hierbei ist offen, ob solche vollständig im 3D-Druckverfahren hergestellte, einstückige Trennteller bzw. einstückige Trenntellerpakete den hohen Zentrifugalkräften, wie sie in einer in Betrieb befindlichen Zentrifuge herrschen, dauerhaft standhalten.

Aufgabe der vorliegenden Erfindung ist es demnach, die Nachteile des Standes der Technik zumindest teilweise zu beseitigen.

Die Aufgabe wird mit einem Trennteller nach Anspruch 1 gelöst. Ferner schafft die Erfindung auch das Trenntellerpaket nach Anspruch 20 und eine Zentrifuge mit einem solchen Trenntellerpaket nach Anspruch 21 sowie das Verfahren nach Anspruch 22.

Demnach wird ein Trennteller für eine Zentrifuge, insbesondere für einen Separator, geschaffen, wobei der Trennteller dazu vorgesehen ist, in einem Trenntellerstapel in einem Trommelinnenraum einer Trommel der Zentrifuge zum Trennen eines heterogenen Stoffgemisches - wie z.B. eine fließfähige Suspension oder eine fließfähige Emulsion - angeordnet zu sein, wobei der Trennteller einen in einem Umformverfahren aus einem Zuschnitt geschaffenen kegelstumpfmantelartigen Grundkörper mit einer Innenfläche und einer Außenfläche und wenigstens einem darauf aufgebrachten Funktionselement aufweist, wobei das wenigstens eine Funktionselement durch ein additives Fertigungsverfahren hergestellt ist bzw. durch eine additive Fertigung hergestellt wird

Bei der additiven Fertigung bzw. einem additiven Fertigungsverfahren wird Material Schicht für Schicht aufgetragen und so eine dreidimensionale Struktur erzeugt. Beim Aufbau finden physikalische oder chemische Härtungs- oder Schmelzprozesse statt.

Durch die Erfindung wird somit ein Trennteller geschaffen, der einerseits als Grundkörper einen mit vorteilhaft bewährter Technologie umgeformten Grundkörper nutzt, der den hohen Zentrifugalkräften, wie sie in einer in Betrieb befindlichen Zentrifuge herrschen, dauerhaft standhält und andererseits wenigstens ein in einem weiten Bereich topologisch, geometrisch und werkstofflich frei gestaltbares und damit vorteilhaftes Funktionselement -wie z.B. einen oder mehrere Abstandshalter und /oder eine Beschichtung oder eine Schicht mit besonderen Eigenschaften- auf dem Trennteller zur Verfügung stellt.

In einer bevorzugten Ausführungsvariante der Erfindung ist vorgesehen, dass das additive Fertigungsverfahren ein 3D-Druckverfahren ist. Das 3D-Druckverfahren bietet vorteilhaft große Freiheitsgrade hinsichtlich der Topologie, der Geometrie und bei der Wahl des Werkstoffs bei der Gestaltung der Funktionselemente.

In einer weiteren bevorzugten Ausführungsvariante der Erfindung ist vorgesehen, dass das Funktionselement wenigstens zwei Abstandshalter aufweist. Denn erfindungsgemäß lassen sich insbesondere Abstandshalter variabel bzw. mit großen Freiheitsgraden gestalten. Es kann zudem auf kostenintensive Umformwerkzeuge zum Formen von Trenntellern mit verschieden ausgestalteten Abstandshaltern verzichtet werden.

Es ist vorteilhaft, wenn die Trennteller und die Abstandshalter aus einem gleichen Material, insbesondere einem gleichen Metall hergestellt sind. Es kann aber auch nach einer anderen Option sinnvoll sein, dass der Trenntellerwerkstoff und der Werkstoff der Abstandshalter nicht aus dem gleichen Material bzw. aus verschiedenen Materialien hergestellt sind. Mögliche Materialien hierfür sind Carbon oder Graphit. Ebenso kann es z.B. sinnvoll sein, dass der Trenntellerteller aus Metall hergestellt ist, die Abstandshalter aber aus anderem Metall oder aus einem nichtmetallischen Material, beispielsweise aus einem (elektrisch) isolierenden Werkstoff, wie z.B. nichtleitendem Kunststoff, Kunstharz, oder nichtleitender Keramik. Dadurch kann z.B. eine Zentrifuge mit besonders definierten Eigenschaften hergestellt werden.

Vorteilhaft ist, wenn die Abstandshalter nach einer vorteilhaften Ausgestaltung spaltfrei mit dem Grundkörper verbunden sind. Dadurch können hygienische Anforderungen an die Zentrifuge einfach und ohne zusätzlichen Aufwand erfüllt werden.

Es ist ebenfalls vorteilhaft, wenn die Abstandshalter auf einer Außenfläche und /oder einer Innenfläche des Grundkörpers eines Trenntellers angeordnet sind. Sofern sowohl auf der Außenfläche als auch auf der Innenfläche des Grundkörpers Abstandshalter angeordnet sind, können die beiden jeweils benachbarten Trennteller ohne Abstandshalter ausgeführt werden. Dadurch ergeben sich neue Ausgestaltungsmöglichkeiten und es kann sich auch eine Kostenersparnis bei der Fertigung der Trennteller für eine Zentrifuge ergeben.

Die Querschnittsgeometrie der Abstandshalter ist weitgehend frei wählbar und bezüglich der jeweiligen Anwendung optimierbar. So können die Abstandshalter beispielsweise trapezförmig, kegelstumpfförmig, rechteckig, rechteckig mit abgerundeten Ecken, dreieckig, kegelförmig, halbelilptisch oder halboval oder nach einer anderen mathematisch beschreibbaren Geometrie ausgeführt sein.

Ferner kann die Querschnittsgeometrie der Abstandshalter symmetrisch oder asymmetrisch ausgeführt sein.

Weiterhin kann die Geometrie der Abstandshalter auf einem Trennteller variieren, also müssen nicht alle Abstandshalter auf einem Trennteller mit gleicher Geometrie ausgeführt sein.

Es kann ferner vorgesehen sein, dass sich die Abstandshalter jeweils entlang einer einheitlichen oder jeweils unterschiedlichen oder in Mustern angeordneten, mathematisch beschreibbaren Kurve(n) auf dem Grundkörper erstrecken.

Ferner können die Abstandshalter in gleichmäßiger Teilung oder in nichtgleichmäßiger Teilung oder veränderlicher Teilung oder sich in wiederholenden -also regelmäßigen-Teilungsmustern oder in sich nicht wiederholdenden -also unregelmäßigen- Teilungsmustern auf dem Umfang des Grundkörpers angeordnet sein.

In einer weiteren bevorzugte Ausführungsvariante der Erfindung sind die Abstandshalter in Form von jeweils symmetrisch zu und entlang einer Mantellinie M oder mantellinienparallel angeordneten, länglichen Laschen bzw. Stegen gestaltet. Dadurch ergibt sich eine bewährte und vorteilhaft einfache Geometrie der Abstandshalter.

Alternativ können die Abstandshalter auch in Form von punkt- oder kreisförmigen Laschen gestaltet sein. Dadurch ergeben sich ggf. nur kleine Berührflächen zwischen zwei Trenntellern, so dass ein Strömungsfeld zwischen den Trenntellern durch die Abstandshalter vorteilhaft wenig beeinflusst wird.

In einer weiteren Alternative können die Laschen durch jeweils gleichlange Spalte/Lücken zwischen den Laschen beabstandet sein. Ferner können die Laschen und / oder die Lücken unterschiedlich lang sein und / oder die Lücken von Lasche zu Lasche unterschiedlich groß sein. Durch die Länge der Lasche und / oder der Lücke können die Strömungsverhältnisse zwischen den Trenntellern einfach und damit vorteilhaft beeinflusst werden.

In einer weiteren bevorzugten Ausführungsvariante der Erfindung ist das Funktionselement eine hydrophile Schicht, die auf dem Grundkörper mit oder ohne Abstandshalter bereichsweise oder vollständig aufgebracht ist. Alternativ kann das Funktionselement auch eine lipophile Schicht sein. Dadurch können die Eigenschaften der Trennteller z.B. beim Zentrifugieren von Milch weiter vorteilhaft beeinflusst werden.

Die erfindungsgemäße Aufgabe wird auch durch einen Trenntellerstapel für eine Zentrifuge -insbesondere für einen Separator- gelöst, der eine Mehrzahl erfindungsgemäßer Trennteller aufweist. Der Stapel kann nur aus erfindungsgemäßen Trenntellern bestehen, er kann aber optional weitere nicht erfindungsgemäße Trennteller (z.B. solche ohne Abstandshalter und/oder ohne Beschichtungen) aufweisen.

Die erfindungsgemäße Aufgabe wird ferner auch durch ein Verfahren zur Herstellung eines Trenntellers gelöst, wobei das erfindungsgemäße Verfahren folgende Verfahrensschritte aufweist:
a) Bereitstellen eines Zuschnitts für den Grundkörper des Trenntellers, einer Umformmaschine und eines Aggregats zur Durchführung eines additiven Fertigungsverfahrens;
b) Umformen des Zuschnitts zu dem Grundkörper auf der Umformmaschine; und
c) Herstellen von wenigstens einem Funktionselement durch das 3D-Druckaggregat.

Dabei können Umformmaschine und 3D-Druckaggregat getrennt ausgebildet sein oder auch in einer baulichen Einheit vereinheitlicht sein.

Durch das erfinderische Verfahren wird ein Trennteller geschaffen, der einerseits einen mit vorteilhaft bewährter Technologie umgeformten Grundkörper nutzt, der den hohen Zentrifugalkräften, wie sie in einer in Betrieb befindlichen Zentrifuge herrschen, dauerhaft standhält und andererseits wenigstens ein in einem weiten Bereich topologisch, geometrisch und werkstofflich frei gestaltbares und damit vorteilhaftes Funktionselement -wie z.B. mehrere Abstandshalter und /oder eine Beschichtung oder eine Schicht mit besonderen Eigenschaften- auf dem Trennteller zur Verfügung stellt.

In einer bevorzugten Ausführungsvariante des erfinderischen Verfahrens ist die Umformmaschine eine Drückmaschine. Dadurch wird der Umformprozess, der zu dem Grundkörper des Trenntellers führt, mit einer bewährten Technologie umgesetzt, die vorteilhaft mit wenigen oder sehr einfachen Werkzeugen auskommt. Vorteilhaft ist, wenn das Aggregat zur Durchführung eines additiven Fertigungsverfahrens ein 3D-Druckaggregat ist.

Ebenso vorteilhaft ist es, wenn das 3D-Druckaggregat an einem Tool Center Point (TCP) eines Industrieroboters montiert ist. Dadurch können auch große Trennteller bedruckt werden, für die übliche Maschinendimensionen eines 3D-Druckers zu klein sind.

In einer weiteren bevorzugten Ausführungsvariante des erfinderischen Verfahrens ist der Zuschnitt des Grundkörpers aus einem metallischen Werkstoff, vorzugsweise Stahl hergestellt. Dadurch wird ein Grundkörper geschaffen, der die hohen Zentrifugalkräfte, wie sie während des Betriebs der Zentrifuge entstehen, dauerhaft sicher erträgt.

Weitere vorteilhafte Ausführungsformen der Erfindung sind den Unteransprüchen zu entnehmen.

Nachfolgend wird die Erfindung anhand von Ausführungsbeispielen unter Bezug auf die Figuren näher beschrieben. Die Erfindung ist nicht auf diese Ausführungsbeispiele beschränkt sondern kann im Rahmen der Ansprüche auch auf andere Weise oder äquivalent umgesetzt werden. Es zeigen:
- Figur 1:: eine schematische Darstellung einer Zentrifuge im Vollschnitt;
- Figur 2:: eine räumliche Ansicht eines erfindungsgemäßen Trenntellers mit kurzen, länglichen Abstandshaltern;
- Figur 3:: eine halbe Schnittdarstellung des Trenntellers aus Fig. 2;
- Figur 4:: eine räumliche Ansicht eines erfindungsgemäßen Trenntellers mit langen länglichen Abstandshaltern;
- Figur 5:: eine halbe Schnittdarstellung des Trenntellers aus Fig. 4;
- Figur 6:: eine räumliche Ansicht eines erfindungsgemäßen Trenntellers mit punktförmigen Abstandshaltern;
- Figur 7:: eine halbe Schnittdarstellung des Trenntellers aus Fig. 6.

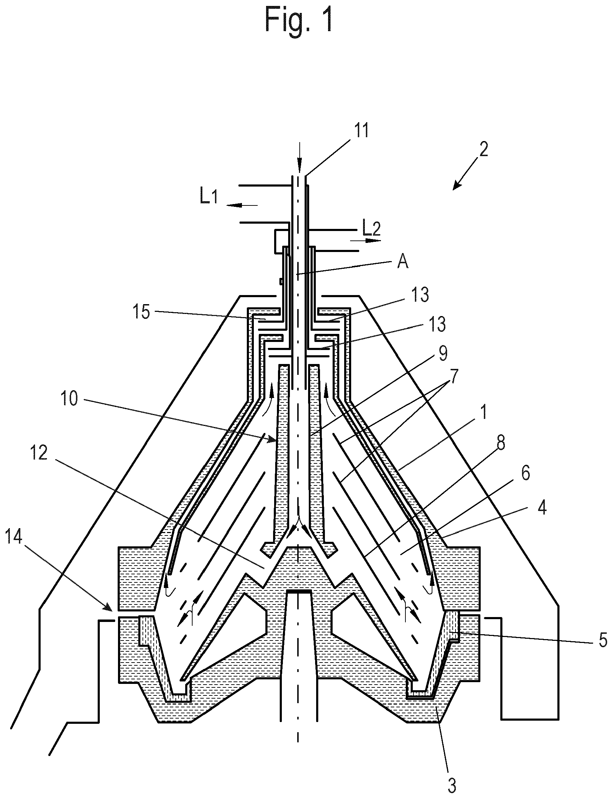

Fig. 1 zeigt eine drehbare Trommel 1 einer Zentrifuge 2, die hier als Separator mit einer vertikaler Drehachse A ausgebildet ist. Die Zentrifuge 2 kann - in an sich bekannter Weise - neben der Trommel 1 noch weitere - hier nicht sämtlich dargestellte - Komponenten wie einen Steuerungsrechner, einen Antriebsmotor zum Drehen der Trommel, eine Haube, ein Gestell, einen Feststofffänger usw. aufweisen.

Die von einer selbst angetriebenen und drehbar gelagerten Antriebsspindel drehbare Trommel 1 ist vorzugsweise - aber nicht zwingend - für einen kontinuierlichen Betrieb - d.h. die kontinuierliche und nicht chargenweise Verarbeitung eines Produktes - ausgelegt.

Die Trommel 1 besteht aus einem Unterteil 3 und einem Oberteil 4. In das Unterteil 3 kann ein Kolbenschieber 5 eingesetzt sein.

In der Trommel, hier in der innen konischen bzw. hier sogar doppelt-konisch geformten Trommel 1, ist in einem Trommelinnenraum 6 ein Trenntellerstapel 7 aus mehreren Trenntellern 8 angeordnet.

Die Trennteller 8 können auf einem Verteilerschaft 9 eines Verteilers 10 angeordnet bzw. auf den Verteilerschaft 9 koaxial zur Drehachse A aufgesteckt sein. Ein Zulaufrohr 11 dient zur Zuleitung eines zu verarbeitenden Produktes. Das Zulaufrohr 11 ist hier als sich im Betrieb nicht drehendes, stillstehendes Element ausgebildet. Es erstreckt sich konzentrisch zur Drehachse A in die Trommel 1.

Nach Fig. 1 ragt es in bevorzugter - aber nicht zwingender - Ausgestaltung von oben in die Trommel 1. Es kann sich aber auch von unten in die Trommel 1 erstrecken. Ein zu verarbeitendes fließfähiges Produkt wird durch das Zulaufrohr 11 zugeleitet. Das aus dem freien Ende des Zulaufrohrs 11 austretende Produkt strömt in sich radial erstreckende Verteilerkanäle 12 des Verteilers 10 und wird in diesen infolge der Drehungen der sich drehenden Trommel 1 mitgedreht bzw. in Umfangsrichtung beschleunigt.

Die Verteilerkanäle 12 münden in den Trommelinnenraum 6 mit dem Trenntellerstapel 7. In dem Trommelinnenraum 6 - auch Schleuderraum genannt - erfolgt eine Klärung eines Produktes von Feststoffen sowie eine Trennung in eine, zwei oder mehr Flüssigkeitsphasen unterschiedlicher Dichte. Zur Ableitung der wenigstens einen Flüssigkeitsphase L1 dienen einer oder mehrere Abläufe für Flüssigkeitsphasen, hier rein beispielhaft zwei Flüssigkeitsphasen L1 und L2.

Die aus dem Trenntellerstapel 7 radial nach innen hin ablaufende Flüssigkeit strömt in eine Schälscheibenkammer 15, die sich mit der Trommel 1 dreht und als hier oberer abschließender Teil dieser Trommel 1 ausgebildet ist. In der Schälscheibenkammer ist eine Schälscheibe 13 angeordnet. Die Schälscheibe 13 arbeitet nach dem Wirkprinzip einer Zentripetalpumpe und fördert dementsprechend die Flüssigphase(n) L1 bzw. L2 nach außen. Die Flüssigkeitsauslässe aus der Trommel können aber auch in anderer Weise ausgestaltet sein.

Zu- und Ablaufleitungen in und aus der Trommel können offen, halb geschlossen, hydrohermetisch oder hermetisch ausgeführt werden (siehe "Industrie-Zentrifugen", Band II, Kapitel 6.9 von Werner H. Stahl).

Die Feststoffe werden hier durch umfangsverteilte, sich radial erstreckende Austrittsöffnungen 14 vorzugsweise im Bereich des größten Radius/Umfangs der Trommel 1 aus der Trommel 1 nach außen ausgestoßen.

Nach Fig. 1 ist für den Feststoffauslass in dem Unterteil 3 ein optionaler, hydraulisch betätigbarer Kolbenschieber 5 vorgesehen, mit dem die Austrittsöffnungen 14 diskontinuierlich geöffnet und wieder verschlossen werden können. Der Feststoffauslass kann auch anders als hier dargestellt gestaltet sein, z.B. in Form von Austrittsdüsen. Es kann ggf. auch auf einen Feststoffauslass verzichtet werden.

Alternativ könnte der Separator auch lediglich zur zentrifugalen Trennung von zwei Flüssigkeiten vorgesehen sein. Er könnte zudem alternativ auch für einen Batchbetrieb ausgelegt sein.

Zudem könnte die Zentrifuge auch eine Vollmantel-Schneckenzentrifuge oder Dekanterzentrifuge sein, die ein Trenntellerpaket zur weiteren Klärung der Flüssigkeitsphase aufweist.

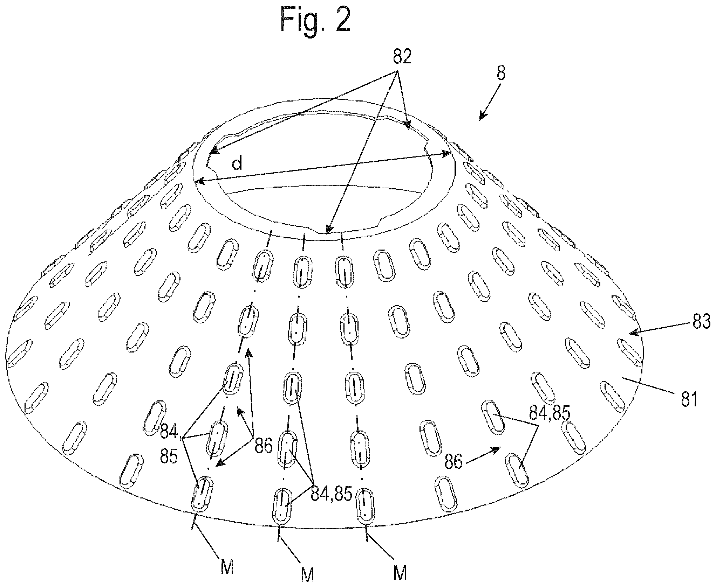

Fig. 2 zeigt einen erfindungsgemäßen Trennteller 8 für eine Zentrifuge. Der Trennteller 8 weist einen kegelstumpfmantelartigen Grundkörper 81 auf. Der Grundkörper 81 des Trenntellers 8 ist vorzugsweise durch einen Umformprozess -besonders bevorzugt durch einen Drückprozess- aus einem metallischen Werkstoff -vorzugsweise aus Stahl- hergestellt worden. Der Trennteller 8 kann an einem kleineren Durchmesser d des kegelstumpfartigen Grundkörpers 81 eine Mitnehmergeometrie 82 aufweisen.

Die Mitnehmergeometrie 82 ist Teil einer drehfesten Formschlussverbindung zwischen dem jeweiligen Trennteller 8 und dem mit der Mitnehmergeometrie 82 geometrisch korrespondierenden Verteilerschaft 9 (hier nicht dargestellt, siehe Fig. 1), der koaxial zu der Drehachse A innerhalb des Schleuderraums der Zentrifuge 1 angeordnet ist und auf den während der Montage der Trommel 1 mehrere Trennteller 8 aufgesteckt werden, bis ein vorgesehener Trenntellerstapel 7 entstanden ist.

Der Trennteller 8 weist an seinem Grundkörper 81 wenigstens ein Funktionselement auf. Erfindungsgemäß ist vorgesehen, dass das wenigstens eine Funktionselement durch ein additives Fertigungsverfahren hergestellt ist. Dadurch ist das wenigstens eine Funktionselement vorteilhaft in einem weiten Bereich topologisch, geometrisch und werkstofflich frei gestaltbar.

Ein Funktionselement im Sinne der vorliegenden Erfindung ist ein Element, das dem Trennteller 8 zugeordnet ist und eine Teilfunktion des Trenntellers 8 erfüllt. Teilfunktionen des Trenntellers 8 sind z.B. Abstand zu einem benachbarten Trennteller 8 in dem Trenntellerstapel 7 halten, so dass ein Spalt zwischen den benachbarten Trenntellern 8 entsteht.

Ferner gehört zu den Teilfunktionen z.B. Lipophilie, d.h. eine gute Löslichkeit von Fetten fördernde Eigenschaft oder Hydrophilie, d.h. eine starke Wechselwirkung mit Wasser fördernde Eigenschaft. Weist der Grundkörper 81 des Trenntellers 8 Bereiche oder Schichten mit lipophilen Eigenschaften und / oder Bereiche oder Schichten mit hydrophilen Eigenschaften auf, kann dies die trenneigenschaften des Trenntellers 8 bzw. des Trenntellerstapels 7, das aus entsprechenden Trenntellern 8 aufgebaut ist in vorteilhafter Weise beeinflussen.

Zur Erfüllung der Teilfunktion "Abstand zu einem benachbarten Trennteller 8 in dem Trenntellerstapel 7 halten, so dass ein Spalt zwischen den benachbarten Trenntellern 8 entsteht" weist der Trennteller 8 im Beispiel der Fig. 2 an einer Außenfläche 83 des Grundkörpers 81 mehrere Abstandshalter 84 auf. Diese sind im additiven Fertigungsverfahren, insbesondere im 3-D-Druck, auf dem bereitgestellten Grundkörper erzeugt worden.

Die Abstandshalter 84 können durch dieses Fertigungsverfahren vorteilhaft fest und spaltfrei mit dem Grundkörper 81 verbunden werden, so dass ein zusätzliches Fügen der Abstandshalter 84 auf dem Grundkörper 81 -insbesondere auch ein solches Fügen, um Spalte zwischen dem Abstandshalter 84 und dem Grundkörper 81 zu füllenvorteilhaft entfallen kann.

Die Abstandshalter 84 können alternativ auch auf einer Innenfläche des Grundkörpers 81 angeordnet sein. In einer weiteren alternativen Ausführungsform können die Abstandshalter 84 sowohl auf der Außenfläche 83 als auch auf der Innenfläche des Grundkörpers 81 angeordnet sein. Werden sie auf der Außenfläche 83 und auf der Innenfläche aufgedruckt, kann der im Trenntellerstapel 7 benachbarte Trennteller 8 ohne Abstandshalter 84 ausgeführt werden. Dadurch wird der Fertigungsaufwand für die Trennteller 8 vorteilhaft reduziert und damit die Kosten gesenkt.

Die Abstandshalter 84 können aus einem metallischen Werkstoff oder einen nichtmetallischen Werkstoff -wie z.B. Kunststoff oder Keramik- hergestellt sein. Hierdurch kann z.B. die Teilfunktion des thermischen oder elektrischen Isolierens zweier benachbarter Trennteller 8 realisiert werden.

Die Querschnittsgeometrie der Abstandshalter 84 lässt sich durch das erfindungsgemäß vorgesehene, additive Fertigungsverfahren zur Herstellung der Abstandshalter 84 frei wählen. Insofern kann die Querschnittsgeometrie der Abstandshalter 84 z.B. trapezförmig rechteckig, rechteckig mit abgerundeten Ecken, halbeliptisch oder halboval ausgeführt sein oder eine andere vorteilhafte Geometrie aufweisen. Die Querschnittsgeometrie der Abstandshalter 84 kann auch asymmetrisch ausgeführt sein.

Die Abstandshalter 84 sind in dem Ausführungsbeispiel der Fig. 2 in Form von jeweils symmetrisch zu und entlang einer Mantellinie M oder mantellinienparallel angeordneten, längliche Laschen 85 gestaltet. Jede Lasche 85 ist in einer Ansicht senkrecht zur Außenfläche 83 als ein Oval aus zwei Halbkreisen und einem Rechteck mit parallelen Seiten -also ähnlich einer Stadionlaufbahn- gestaltet. Die jeweilige Lasche 85 weist hier im Bereich des Rechtecks einen trapezförmigen Querschnitt sowie im Bereich der Halbkreise jeweils einen halben kegelstumpfförmigen Querschnitt auf.

Mit dem Begriff "Mantellinie" ist eine solche Linie gemeint, die jeweils senkrecht auf zwei parallelen Tangenten errichtet ist, wobei die Tangenten jeweils den kleinen Durchmesser d eines Kegelstumpfes und einen großen Durchmesser des Kegelstumpfes tangieren.

Die Laschen 85 sind hier beispielhaft in einer gleichmäßigen Teilung auf dem Umfang des Grundkörpers 81 verteilt, hier auf der Außenfläche 83 des Grundkörpers 81. Die Abstandshalter 84 können auch in nichtgleichmäßiger Teilung oder veränderlicher Teilung oder sich in wiederholenden -also regelmäßigen- Teilungsmustern oder in sich nicht wiederholdenden -also unregelmäßigen- Teilungsmustern auf dem Umfang des Grundkörpers 81 angeordnet sein.

Die Laschen 85 sind hier durch jeweils gleichlange Spalte/Lücken 86 zwischen den Laschen85 beabstandet. Die Lücken 86 können auch unterschiedlich lang sein und / oder von Lasche 85 zu Lasche 85 unterschiedlich groß sein. Auch die Laschen 85, die symmetrisch zu und entlang oder parallel zu einer Mantellinie M angeordnet sind, können in ihrer Länge variieren.

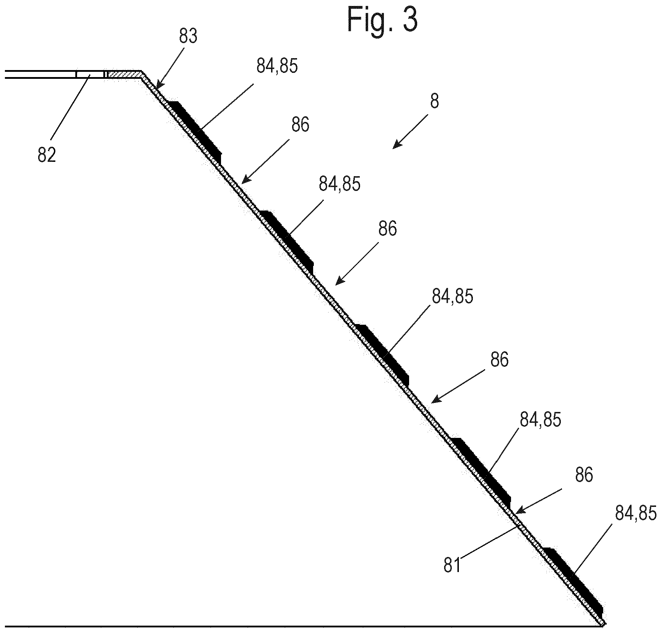

In Fig. 3 ist der Trennteller 8 aus Fig. 2 in einer halben Schnittansicht dargestellt. Gut erkennbar ist der Grundkörper 81, auf dessen Außenfläche 83 die Abstandshalter 84 bzw. hier die Laschen 85 aufgebracht sind.

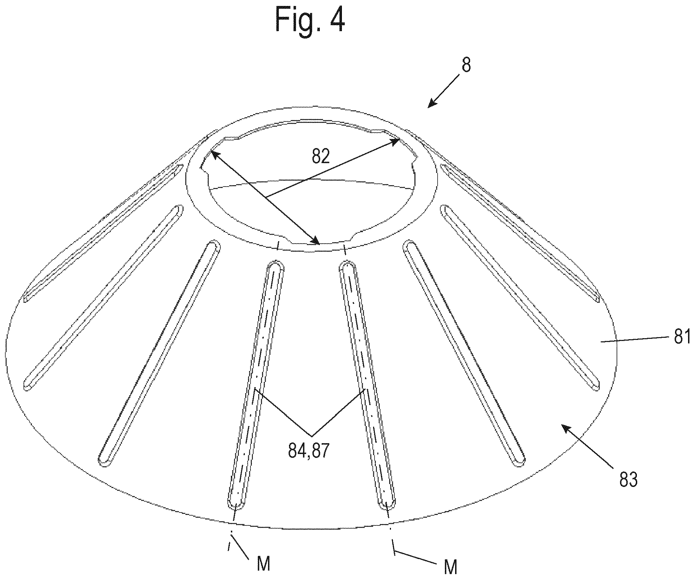

In Fig. 4 ist ein weiteres Ausführungsbeispiel der Abstandshalter 84 dargestellt. Die Abstandshalter 84 sind in dem Ausführungsbeispiel der Fig. 2 in Form von symmetrisch zu und entlang einer Mantellinie M oder mantellinienparallel angeordneten, linienförmigen Laschen 87 gestaltet, wobei die Laschen 87 hier beispielhaft in einer gleichmäßigen Teilung auf dem Umfang des Grundkörpers 81, hier auf der Außenfläche 83 des Grundkörpers 81 verteilt sind. Jede einzelne Lasche 87 weist hier eine durchgehende Länge auf, die annähernd der Länge einer Mantellinie M auf der Außenfläche 83 des kegelstumpfförmigen Grundkörpers 81 entspricht.

Als Querschnittsgeometrie der Laschen 87 wurde hier ebenfalls eine trapezförmige Geometrie gewählt, wobei die Enden analog zur Ausführung nach Fig. 2 einen halben kegelstumpfförmigen Querschnitt aufweisen.

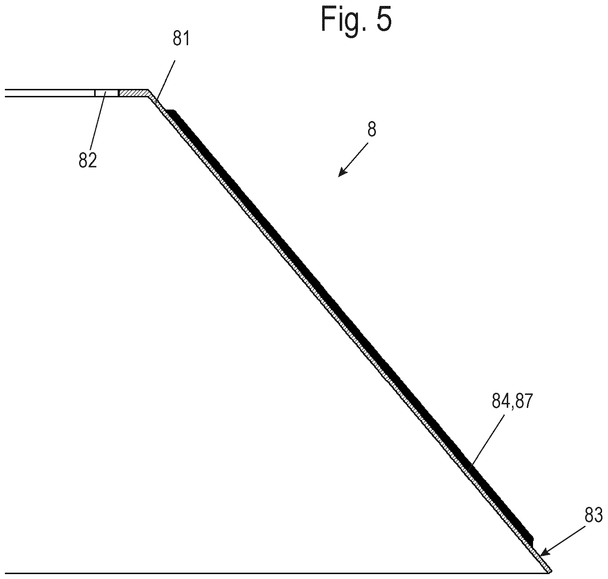

In Fig. 5 ist der Trennteller 8 aus Fig. 4 in einer halben Schnittansicht dargestellt. Gut erkennbar ist der Grundkörper 81, auf dessen Außenfläche 83 die Abstandshalter 84 bzw. hier die Laschen 87 aufgebracht sind.

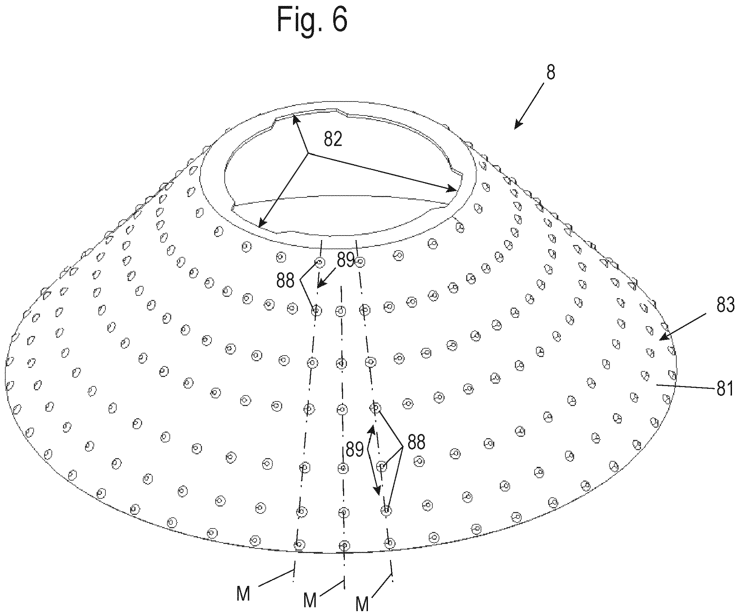

In Fig. 6 ist ein weiteres Ausführungsbeispiel der Abstandshalter 84 dargestellt. Die Abstandshalter 84 sind in dem Ausführungsbeispiel der Fig. 2 in Form von symmetrisch zu und entlang einer Mantellinie M oder mantellinienparallel angeordneten, punkt- oder genauer kreisförmigen Laschen 88 gestaltet, wobei die Laschen 88 hier beispielhaft in einer gleichmäßigen Teilung auf dem Umfang des Grundkörpers 81, hier auf der Außenfläche 83 des Grundkörpers 81 verteilt sind.

Die Laschen 88 sind hier durch jeweils gleichlange Spalte/Lücken 89 zwischen den Laschen 88 beabstandet. Die Lücken 89 können auch unterschiedlich lang sein und / oder von Lasche 88 zu Lasche 88 unterschiedlich groß sein.

Als Querschnittsgeometrie der Laschen 88 wurde hier eine kegelstumpfförmige Geometrie gewählt.

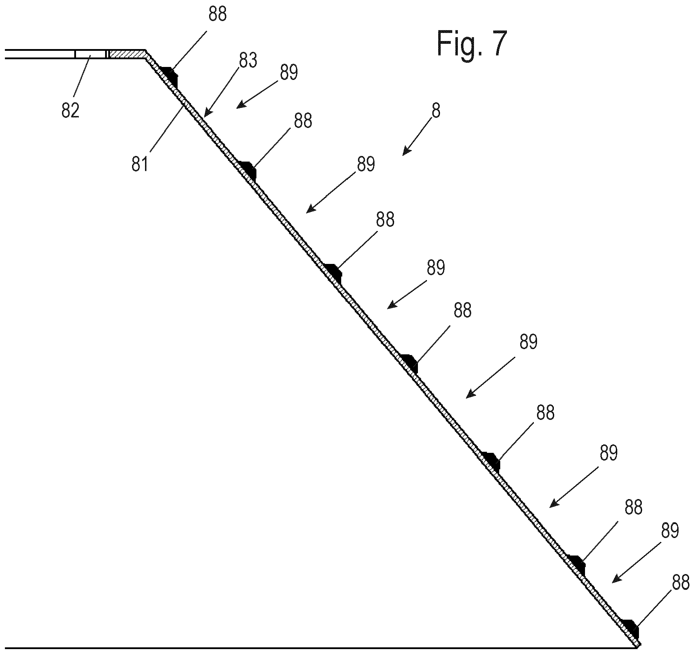

In Fig. 7 ist der Trennteller 8 aus Fig. 6 in einer halben Schnittansicht dargestellt. Gut erkennbar ist der Grundkörper 81, auf dessen Außenfläche 83 die Abstandshalter 84 bzw. hier die Laschen 87 aufgebracht sind.

Die Geometrie der Abstandshalter 84 auf einem Trennteller kann variieren. Demzufolge können -abweichend von den Beispielen der Figuren 2 bis 7- auch verschieden geformte Abstandshalter 84 auf einem Trennteller 8 angeordnet sein.

Hinsichtlich ihrer Topologie können sich die Abstandshalter 84 auch -abweichend von den Beispielen der Figuren 2 bis 7- jeweils entlang einer einheitlichen oder jeweils unterschiedlichen oder in Mustern angeordneten, mathematisch beschreibbaren Kurve(n) erstrecken. Auch die Dimensionen -also z.B. Breite und Länge- der Abstandshalter 84 auf einem Trennteller 8 können variieren.

Ebenso kann die Querschnittsgeometrie der Abstandshalter 84 variieren. Denkbare Querschnittsgeometrien sind z.B. Dreieck, Trapez, Kreis, Kreisring, Rechteck, Elipsen Ovale oder eine andere mathematisch beschreibbare Geometrie. Die Querschnittsgeometrie der Abstandshalter 84 kann auch asymmetrisch ausgeführt sein oder von Abstandshalter 84 zu Abstandshalter 84 auf einem Trennteller 8 variieren.

Die Herstellung durch ein additives Fertigungsverfahren, besonders bevorzugt durch ein 3D-Druckverfahren kann sehr flexibel mit einem Industrieroboter erfolgen, an dessen "Tool Center Point" ein 3D-Druckaggregat montiert ist. Dadurch sind auch große Trennteller 8 vorteilhaft mit Abstandshaltern 84 bedruckbar, da die Verfahrbarkeit des 3D-Druckaggregats nur durch die Reichweite des eingesetzten Roboters eingeschränkt ist.

Die Außenseite 83 zwischen den Abstandshaltern 84 oder die Innenseite bzw. die Innenseite zwischen den Abstandshaltern 84 -sofern auch die Innenseite Abstandshalter 84 aufweist- des jeweiligen Trenntellers 8 können optional mit weiteren Funktionselementen durch das additive Fertigungsverfahren versehen werden. So können z.B. bestimmte Bereiche des Trenntellers 8 mit einer Schicht aus einem hydrophilen Werkstoff bedruckt werden und andere Bereiche mit einer Schicht aus einem lipophilen Werkstoff bedruckt werden. Dies bewirkt z.B. bei der Trennung von Milch, dass die Gleiteigenschaften von Rahm bzw. Magermilch vorteilhaft gezielt beeinflusst werden können.

Werden die in einem Trenntellerstapel 7 benachbarten Trennteller 8 durch aufgedruckte Abstandshalter 84 aus einem elektrisch isolierenden Material elektrisch voneinander isoliert, können die in einem Trenntellerstapel 7 benachbarte Trennteller 8 mit unterschiedlichen elektrischen Potentialen versehen werden, wodurch ebenfalls die Trenneigenschaft des Trenntellerpaketes 7 vorteilhaft beeinflusst werden kann.

Die Schichten können aus einem metallischen Werkstoff oder einen nichtmetallischen Werkstoff -wie z.B. Kunststoff oder Keramik- hergestellt sein.

Zur Herstellung eines erfindungsgemäßen Trenntellers 8 wird folgendes Verfahren angegeben:
Zunächst wird ein Zuschnitt für den Grundkörper 81 des Trenntellers 8 sowie eine Umformmaschine sowie ein Aggregat zur Durchführung eines additiven Fertigungsverfahrens bereitgestellt. In einem zweiten Verfahrensschritt wird der Zuschnitt auf der Umformmaschine zu dem Grundkörper 81 umgeformt. In einem abschließenden Verfahrensschritt wird das wenigstens eine Funktionselement durch das 3D-Druckaggregat hergestellt.

Vorteilhafterweise ist die Umformmaschine eine Drückmaschine. Dadurch ist ein bewährtes Fertigungsverfahren für den Grundkörper 81 vorgesehen.

Als Aggregat zur Durchführung eines additiven Fertigungsverfahrens ist ein 3D-Druckaggregat vorgesehen. Es ist vorteilhaft, wenn dass das 3D-Druckaggregat an einem Industrieroboter montiert ist.

Der Zuschnitt des Grundkörpers 81 ist aus einem metallischen Werkstoff, vorzugsweise Stahl hergestellt. Dadurch ist sichergestellt, dass der Trennteller 8 die auf ihn während des Betriebs der Zentrifuge 2 wirkenden Kräfte dauerhaft standhält.

Das wenigstens eine Funktionselement ist aus einem metallischen oder nicht metallischen Werkstoff hergestellt. Dadurch ergibt sich für das jeweilige Funktionselement eine vorteilhaft hohe Gestaltungsfreiheit.

### Bezugszeichenliste

- 1: Trommel
- 2: Zentrifuge
- 3: Unterteil
- 4: Oberteil
- 5: Kolbenschieber
- 6: Trommelinnenraum
- 7: Trenntellerstapel
- 8: Trennteller
- 81: Grundkörper
- 82: Mitnehmergeometrie
- 83: Außenfläche
- 84: Abstandshalter
- 85: Lasche
- 86: Lücke
- 87: Lasche
- 88: Lasche
- 89: Lücke
- 9: Verteilerschaft
- 10: Verteiler
- 11: Zulaufrohr
- 12: Verteilerkanal
- 13: Schälscheibe
- 14: Austrittsöffnung
- 15: Schälscheibenkammer

- A: Drehachse
- d: Durchmesser
- L1, L2: Flüssigphasen
- M: Mantellinie

## Patentansprüche

1. Trennteller (8) für eine Zentrifuge (2), insbesondere für einen Separator, wobei der Trennteller (8) dazu vorgesehen ist, in einem Trenntellerstapel (7) in einem Trommelinnenraum (6) einer Trommel (1) der Zentrifuge (2) zum Trennen eines Stoffgemisches angeordnet zu sein, wobei der Trennteller (8) einen in einem Umformverfahren aus einem Zuschnitt geschaffenen kegelstumpfmantelartigen Grundkörper (81) mit einer Innenfläche und einer Außenfläche (83) und wenigstens einem darauf aufgebrachten Funktionselement aufweist, **dadurch gekennzeichnet, dass** das wenigstens eine Funktionselement durch ein additives Fertigungsverfahren hergestellt ist.

2. Trennteller (8) nach Anspruch 1, **dadurch gekennzeichnet, dass** das additive Fertigungsverfahren ein 3D-Druckverfahren ist.

3. Trennteller (8) nach Anspruch 1 oder 2, **dadurch gekennzeichnet, dass** das Funktionselement wenigstens zwei Abstandshalter (84) aufweist.

4. Trennteller (8) nach Anspruch 3, **dadurch gekennzeichnet, dass** die Abstandshalter (84) spaltfrei mit dem Grundkörper (81) verbunden sind.

5. Trennteller (8) nach Anspruch 3 oder 4, **dadurch gekennzeichnet, dass** die Abstandshalter (84) auf einer Außenfläche (83) und /oder einer Innenfläche des Grundkörpers (81) angeordnet sind.

6. Trennteller (8) nach einem der Ansprüche 3 bis 5, **dadurch gekennzeichnet, dass** die Abstandshalter (84) aus einem metallischen Werkstoff oder einen nichtmetallischen Werkstoff -wie z.B. Kunststoff oder Keramik- hergestellt sind.

7. Trennteller (8) nach einem der Ansprüche 3 bis 6, **dadurch gekennzeichnet, dass** die Querschnittsgeometrie der Abstandshalters (84) trapezförmig, kegelstumpfförmig, rechteckig, rechteckig mit abgerundeten Ecken, dreieckig, kegelförmig, halbeliptisch oder halboval oder nach einer anderen mathematisch beschreibbare Geometrie ausgeführt ist.

8. Trennteller (8) nach einem der Ansprüche 3 bis 7, **dadurch gekennzeichnet, dass** die Querschnittsgeometrie der Abstandshalter (84) symmetrisch oder asymmetrisch ausgeführt ist.

9. Trennteller (8) nach einem der Ansprüche 3 bis 8, **dadurch gekennzeichnet, dass** die Geometrie der Abstandshalter (84) auf einem Trennteller (8) variiert, also nicht alle Abstandshalter (84) auf einem Trennteller (8) mit gleicher Geometrie ausgeführt sind.

10. Trennteller (8) nach einem der Ansprüche 3 bis 9, **dadurch gekennzeichnet, dass** sich die Abstandshalter (84) jeweils entlang einer einheitlichen oder jeweils unterschiedlichen oder in Mustern angeordneten, mathematisch beschreibbaren Kurve(n) auf dem Grundkörper (81) erstrecken.

11. Trennteller (8) nach einem der Ansprüche 3 bis 10, **dadurch gekennzeichnet, dass** die Dimensionen -also z.B. Breite und Länge- der Abstandshalter 84 auf einem Trennteller (8) variiert.

12. Trennteller (8) nach einem der Ansprüche 3 bis 10, **dadurch gekennzeichnet, dass** die Abstandshalter (84) in gleichmäßiger Teilung oder in nichtgleichmäßiger Teilung oder veränderlicher Teilung oder sich in wiederholenden -also regelmäßigen- Teilungsmustern oder in sich nicht wiederholdenden -also unregelmäßigen-Teilungsmustern auf dem Umfang des Grundkörpers (81) angeordnet sind.

13. Trennteller (8) nach einem der Ansprüche 3 bis 12, **dadurch gekennzeichnet, dass** die Abstandshalter (84) in Form von jeweils symmetrisch zu und entlang einer Mantellinie M oder mantellinienparallel angeordneten, länglichen Laschen (85, 87) gestaltet sind.

14. Trennteller (8) nach einem der Ansprüche 3 bis 12, **dadurch gekennzeichnet, dass** die Abstandshalter (84) in Form von punkt- oder kreisförmigen Laschen (88) gestaltet sind.

15. Trennteller (8) nach Anspruch 13, **dadurch gekennzeichnet, dass** die Laschen (85) durch jeweils gleichlange Lücken (86) zwischen den Laschen (85) beabstandet sind.

16. Trennteller (8) nach Anspruch 13, **dadurch gekennzeichnet, dass** die die Laschen (85) und / oder die Lücken (86) unterschiedlich lang sind und / oder die Lücken (86) von Lasche (85) zu Lasche (85) unterschiedlich groß sind.

17. Trennteller (8) nach einem der vorgenannten Ansprüche, **dadurch gekennzeichnet, dass** das Funktionselement eine hydrophile Schicht ist.

18. Trennteller (8) nach einem der Ansprüche 1 bis 3, **dadurch gekennzeichnet, dass** das Funktionselement eine lipophile Schicht ist.

19. Trennteller (8) nach einem der vorgenannten Ansprüche, **dadurch gekennzeichnet, dass** der Trennteller (8) an einem kleineren Durchmesser d des kegelstumpfartigen Grundkörpers (81) eine Mitnehmergeometrie (82) aufweist, die mit einem Verteilerschaft (9) der Zentrifuge (2) geometrisch korrespondiert.

20. Trenntellerstapel (7) für eine Zentrifuge (2), insbesondere Separator, **dadurch gekennzeichnet, dass** der Trenntellerstapel (7) eine Mehrzahl an Trenntellern (8) nach einem der Ansprüche 1 bis 19 aufweist.

21. Zentrifuge (2), insbesondere Separator oder Vollmantel-Schneckenzentrifuge, **dadurch gekennzeichnet, dass** in dem Trommelinnenraum (6) der Trommel (1) der Zentrifuge (2) ein Trenntellerstapel (7) nach Anspruch 20 eingesetzt ist.

22. Verfahren zur Herstellung eines Trenntellers (8) nach einem der Ansprüche 1 bis 19, **gekennzeichnet durch** folgende Verfahrensschritte:
a) Bereitstellen eines Zuschnitts für den Grundkörper (81) des Trenntellers (8), einer Umformmaschine und eines Aggregats zur Durchführung eines additiven Fertigungsverfahrens;
b) Umformen des Zuschnitts zu dem Grundkörper (81) auf der Umformmaschine;
c) Herstellen von wenigstens einem Funktionselement durch das 3D-Druckaggregat.

23. Verfahren nach Anspruch 22, **dadurch gekennzeichnet, dass** die Umformmaschine eine Drückmaschine ist.

24. Verfahren nach Anspruch 22 oder 23, **dadurch gekennzeichnet, dass** das Aggregat zur Durchführung eines additiven Fertigungsverfahrens ein 3D-Druckaggregat ist.

25. Verfahren nach Anspruch 24, **dadurch gekennzeichnet, dass** das 3D-Druckaggregat an einem Tool Center Point (TCP) eines Industrieroboters montiert ist.

26. Verfahren nach einem der Ansprüche 22 bis 25, **dadurch gekennzeichnet, dass** das wenigstens eine Funktionselement aus einem metallischen oder nicht metallischen Werkstoff hergestellt ist.

## Claims

1. Separator disc (8) for a centrifuge (2), in particular for a separator, wherein the separator disc (8) is provided to be arranged in a separator disc stack (7) in a drum interior (6) of a drum (1) of the centrifuge (2) for separating a mixture of substances, wherein the separator disc (8) comprises a frustoconical shell-like base body (81) created from a blank in a forming process and having an inner surface and an outer surface (83) and at least one functional element applied thereto, **characterized in that** the at least one functional element is produced by an additive manufacturing process.

2. Separator disc (8) according to claim 1, **characterized in that** the additive manufacturing process is a 3D printing process.

3. Separator disc (8) according to claim 1 or 2, **characterized in that** the functional element has at least two spacers (84).

4. Separator disc (8) according to claim 3, **characterized in that** the spacers (84) are connected to the base body (81) without a gap.

5. Separator disc (8) according to claim 3 or 4, **characterized in that** the spacers (84) are arranged on an outer surface (83) and/or an inner surface of the base body (81).

6. Separator disc (8) according to one of claims 3 to 5, **characterized in that** the spacers (84) are made of a metallic material or a non-metallic material such as plastic or ceramic.

7. Separator disc (8) according to one of claims 3 to 6, **characterized in that** the cross-sectional geometry of the spacer (84) is trapezoidal, frustoconical, rectangular, rectangular with rounded corners, triangular, conical, semi-elliptical or semi-oval or according to another geometry which can be described mathematically.

8. Separator disc (8) according to one of claims 3 to 7, **characterized in that** the cross-sectional geometry of the spacers (84) is of symmetrical or asymmetrical design.

9. Separator disc (8) according to one of claims 3 to 8, **characterized in that** the geometry of the spacers (84) on a separator disc (8) varies, i.e. not all spacers (84) on a separator disc (8) are designed with the same geometry.

10. Separator disc (8) according to one of claims 3 to 9, **characterized in that** the spacers (84) each extend along a uniform or respective different or patterned mathematically describable curve(s) on the base body (81).

11. Separator disc (8) according to one of claims 3 to 10, **characterized in that** the dimensions -i.e. width and length- of the spacers 84 on a separator disc (8) vary.

12. Separator disc (8) according to one of claims 3 to 10, **characterized in that** the spacers (84) are arranged in uniform pitch or in non-uniform pitch or variable pitch or in repeating -i.e. regular- pitch patterns or in non-repeating -i.e. irregular- pitch patterns on the circumference of the base body (81).

13. Separator disc (8) according to one of claims 3 to 12, **characterized in that** the spacers (84) are configured in the form of respective elongated tabs (85, 87) arranged symmetrically with respect to and along a generatrix M or parallel to the generatrix.

14. Separator disc (8) according to one of claims 3 to 12, **characterized in that** the spacers (84) are designed in the form of point-shaped or circular tabs (88).

15. Separator disc (8) according to claim 13, **characterized in that** the tabs (85) are spaced apart by gaps (86) of equal length between each of the tabs (85).

16. Separator disc (8) according to claim 13, **characterized in that** the tabs (85) and/or the gaps (86) are of different lengths and/or the gaps (86) are of different sizes from tab (85) to tab (85).

17. Separator disc (8) according to one of the preceding claims, **characterized in that** the functional element is a hydrophilic layer.

18. Separator disc (8) according to one of claims 1 to 3, **characterized in that** the functional element is a lipophilic layer.

19. Separator disc (8) according to one of the preceding claims, **characterized in that** the separator disc (8) has, at a smaller diameter d of the frustoconical base body (81), a driver geometry (82) which corresponds geometrically with a distributor shaft (9) of the centrifuge (2).

20. Separator disc stack (7) for a centrifuge (2), in particular separator, **characterized in that** the separator disc stack (7) has a plurality of separator discs (8) according to one of claims 1 to 19.

21. Centrifuge (2), in particular separator or solid drum screw centrifuge, **characterized in that** a separator disc stack (7) according to claim 20 is inserted in the drum interior (6) of the drum (1) of the centrifuge (2).

22. Method for producing a separator disc (8) according to one of claims 1 to 19, **characterized by the** following method steps of:
a) providing a blank for the base body (81) of the separator disc (8), a forming machine and a unit for carrying out an additive manufacturing process;
b) forming the blank into the base body (81) on the forming machine;
c) producing at least one functional element by the 3D printing unit.

23. Method according to claim 22, **characterized in that** the forming machine is a spinning machine.

24. Method according to claim 22 or 23, **characterized in that** the unit for performing an additive manufacturing process is a 3D printing unit.

25. Method according to claim 24, **characterized in that** the 3D printing unit is mounted to a tool center point (TCP) of an industrial robot.

26. Method according to one of claims 22 to 25, **characterized in that** the at least one functional element is made of a metallic or non-metallic material.

## Revendications

1. Disque séparateur (8) pour une centrifugeuse (2), en particulier pour un séparateur, lequel disque séparateur (8) est conçu pour être disposé dans une pile de disques séparateurs (7) dans un volume intérieur de tambour (6) d'un tambour (1) de la centrifugeuse (2) pour séparer un mélange de matières, le disque séparateur (8) présentant un corps de base (81) tronconique créé par un procédé de formage à partir d'une pièce découpée, possédant une face intérieure et une face extérieure (83) et sur lequel au moins un élément fonctionnel est disposé, **caractérisé en ce que** l'au moins un élément fonctionnel est fabriqué par un procédé de fabrication par addition de matière.

2. Disque séparateur (8) selon la revendication 1, **caractérisé en ce que** le procédé de fabrication par addition de matière est un procédé d'impression 3D.

3. Disque séparateur (8) selon la revendication 1 ou 2, **caractérisé en ce que** l'élément fonctionnel comporte au moins deux cales d'écartement (84).

4. Disque séparateur (8) selon la revendication 3, **caractérisé en ce que** les cales d'écartement (84) sont assemblées avec le corps de base (81) sans laisser d'interstice.

5. Disque séparateur (8) selon la revendication 3 ou 4, **caractérisé en ce que** les cales d'écartement (84) sont disposées sur une face extérieure (83) et/ou une face intérieure du corps de base (81).

6. Disque séparateur (8) selon l'une des revendications 3 à 5, **caractérisé en ce que** les cales d'écartement (84) sont fabriquées à partir d'un matériau métallique ou d'un matériau non métallique, par exemple de matière plastique ou de céramique.

7. Disque séparateur (8) selon l'une des revendications 3 à 6, **caractérisé en ce que** la géométrie en section de la cale d'écartement (84) est trapézoïdale, tronconique, rectangulaire, rectangulaire avec des coins arrondis, triangulaire, conique, semi-elliptique ou semi-ovale ou suit une autre géométrie qui peut être décrite mathématiquement.

8. Disque séparateur (8) selon l'une des revendications 3 à 7, **caractérisé en ce que** la géométrie en section des cales d'écartement (84) a une forme symétrique ou asymétrique.

9. Disque séparateur (8) selon l'une des revendications 3 à 8, **caractérisé en ce que** la géométrie des cales d'écartement (84) sur un disque séparateur (8) varie, donc que toutes les cales d'écartement (84) ne sont pas réalisées sur un disque séparateur (8) avec la même géométrie.

10. Disque séparateur (8) selon l'une des revendications 3 à 9, **caractérisé en ce que** les cales d'écartement (84) s'étendent sur le corps de base (81) le long d'une ou plusieurs courbes pouvant être décrites mathématiquement, chacune identique ou différente ou disposées en motifs.

11. Disque séparateur (8) selon l'une des revendications 3 à 10, **caractérisé en ce que** les dimensions, par exemple la largeur et la longueur, des cales d'écartement 84 varient sur un disque séparateur (8).

12. Disque séparateur (8) selon l'une des revendications 3 à 10, **caractérisé en ce que** les cales d'écartement (84) sont réparties à intervalles réguliers ou irréguliers ou variables ou disposées selon des motifs de répartition répétitifs, donc réguliers, ou en motifs de répartition non répétitifs, donc irréguliers, sur la circonférence du corps de base (81).

13. Disque séparateur (8) selon l'une des revendications 3 à 12, **caractérisé en ce que** les cales d'écartement (84) sont conçues sous la forme de pattes (85, 87) allongées, disposées de façon symétrique par rapport à une ligne d'enveloppe M et le long de celle-ci ou parallèlement à la ligne d'enveloppe.

14. Disque séparateur (8) selon l'une des revendications 3 à 12, **caractérisé en ce que** les cales d'écartement (84) sont conformées comme des pattes (88) en forme de points ou de cercles.

15. Disque séparateur (8) selon la revendication 13, **caractérisé en ce que** les pattes (85) sont espacées par des lacunes (86) de même longueur entre les pattes (85).

16. Disque séparateur (8) selon la revendication 13, **caractérisé en ce que** les pattes (85) et/ou les lacunes (86) ont une longueur différente et/ou les lacunes (86) ont une taille différente d'une patte (85) à une autre patte (85).

17. Disque séparateur (8) selon l'une des revendications précédentes, **caractérisé en ce que** l'élément fonctionnel est une couche hydrophile.

18. Disque séparateur (8) selon l'une des revendications 1 à 3, **caractérisé en ce que** l'élément fonctionnel est une couche lipophile.

19. Disque séparateur (8) selon l'une des revendications précédentes, **caractérisé en ce que** le disque séparateur (8) présente sur le plus petit diamètre d du corps de base (81) tronconique une géométrie d'entraînement (82) dont la géométrie correspond à celle de l'arbre de distribution (9) de la centrifugeuse (2).

20. Pile de disques séparateurs (7) pour une centrifugeuse (2), en particulier un séparateur, **caractérisée en ce que** la pile de disques séparateurs (7) présente un grand nombre de disques séparateurs (8) selon l'une des revendications 1 à 19.

21. Centrifugeuse (2), en particulier séparateur ou centrifugeuse à vis à bol plein, **caractérisée en ce qu'**une pile de disques séparateurs (7) selon la revendication 20 est introduite dans le volume intérieur de tambour (6) du tambour (1) de la centrifugeuse (2).

22. Procédé pour la fabrication d'un disque séparateur (8) selon l'une des revendications 1 à 19, **caractérisé en ce qu'**il comprend les étapes suivantes :
a) préparation d'une pièce découpée pour le corps de base (81) du disque séparateur (8), d'une machine de formage et d'un groupe pour l'exécution d'un procédé de fabrication par addition de matière ;
b) formage de la pièce découpée sur la machine de formage pour donner le corps de base (81) ;
c) fabrication d'au moins un élément fonctionnel par le groupe d'impression 3D.

23. Procédé selon la revendication 22, **caractérisé en ce que** la machine de formage est une machine de pressage.

24. Procédé selon la revendication 22 ou 23, **caractérisé en ce que** le groupe pour l'exécution d'un procédé de fabrication par addition de matière est un groupe d'impression 3D.

25. Procédé selon la revendication 24, **caractérisé en ce que** le groupe d'impression 3D est monté en un point d'effecteur d'un robot industriel.

26. Procédé selon l'une des revendications 22 à 25, **caractérisé en ce que** l'au moins un élément fonctionnel est fabriqué à partir d'un matériau métallique ou non métallique.
